# EUROPEAN PATENT SPECIFICATION

(11) **EP 4 300 334 B1**
(45) Date of publication and mention of the grant of the patent: **03.12.2025**
(21) Application number: 23183123.1
(22) Date of filing: 03.07.2023
(51) Int. Cl.: G06F 21/55, G06F 21/57

(54) **METHOD AND SYSTEM FOR SECURING AN ON-LINE CLIENT-SERVER SESSION BY APPLYING COUNTERMEASURES**
VERFAHREN UND SYSTEM ZUR SICHERUNG EINER ONLINE-CLIENT-SERVER-SITZUNG DURCH ANWENDUNG VON GEGENMASSNAHMEN
PROCÉDÉ ET SYSTÈME DE SÉCURISATION D'UNE SESSION CLIENT-SERVEUR EN LIGNE PAR APPLICATION DE CONTRE-MESURES

(30) Priority: 01.07.2022 PT 2022118078; 30.06.2023 US 202318345626
(43) Date of publication of application: 03.01.2024
(73) Proprietor: Feedzai - Consultadoria e Inovação Tecnológica, S.A., 3030-199 Coimbra (PT)
(72) Inventor: CORRALES CASAS, JOSE CARLOS, 3030-199 COIMBRA (PT); MORÁN ANTÓN, DAVID, 3030-199 COIMBRA (PT); ALCOJOR DEL SASTRE, GUILLERMO, 3030-199 COIMBRA (PT); LIÉBANA DE LA BARRERA, JAVIER, 3030-199 COIMBRA (PT); PLA FERNÁNDEZ, FERRAN, 3030-199 COIMBRA (PT); ADDELKADE MARTÍNEZ PÉREZ, ROBERTO, 3030-199 COIMBRA (PT); BARRIGA NEGRA ASCENSÃO, JOÃO TIAGO, 3030-199 COIMBRA (PT)
(74) Representative: Patentree

(56) References cited:
- EP-A1- 3 428 819
- US-A1- 2014 344 927
- US-A1- 2020 401 689

## Description

### TECHNICAL FIELD

The present disclosure relates to a method and system for securing an online client-server session between a client device and a server device by application of at least a countermeasure.

### BACKGROUND

Electronic devices have become ubiquitous in recent decades. Moreover, the widespread availability of mobile Internet connections is transforming our daily lifestyle. Nowadays, businesses, organizations, and government agencies increasingly offer services digitally, rather than (or in complement of) physically. Our society has rapidly adopted these technologies, and customers expect to be able to access services from anywhere, anytime.

The digital world is not untouched by possible malicious actors, as fraudsters aim to exploit digital systems. As digital services increase in popularity, so does digital fraud. Feedzai's recent Financial Crime Report [1], based on over 18 billion transactions, indicates a 233% increase in fraud attacks from 2019 to 2021. At the same time, it is observed a 75% decrease in US cash withdrawals comparing 2019 to 2021, showing the relevance of the digital activities relative to physical alternatives.

Additionally, the availability of devices able to access these services is increasing. For instance, the average American has access to more than ten connected devices in their households. As a result, the attack surface, defined as the number of attack vectors available to malicious actors, is also increasing.

These combined factors lead to the proliferation of different defense systems. Their ultimate goal is to ensure the availability and security of digital services, fostering access and convenience to legitimate users while protecting them, to the highest degree possible, from malicious actors.

The existing defense systems focus on silently analyzing risks while users perform their everyday actions. These systems are active if able to deploy countermeasures to prevent illicit actions. Once they detect certain risk factors, such as anomalous behavior or other fraud indicators, most active systems blindly apply a countermeasure, namely disconnecting the user. Depending on other security settings, attackers can bypass it by reconnecting, particularly without robust security measures such as multi-factor authentication (MFA). Moreover, even if the countermeasure is successful, it is not exempt from a negative impact for those wrongly classified users. The action of inadvertently disconnecting a legitimate user or blocking their access has a significant impact on trust, perception of security, and, ultimately, customer satisfaction.

To counterbalance these attacks there are several systems that leverage countermeasures, namely for fraud prevention in electronic devices.

Ideally, fraud should be prevented rather than detected. As authors of [2] define, fraud prevention systems use mechanisms to avert fraud altogether.

The authors of [3] classify these systems under two major categories: non-technical tools and technical tools. The former tools do not involve technology, and the authors propose two significant groups: legislative tools and training and education tools. Legislative tools involve governmental regulations over electronic activities and cybercrime, but these solutions are often inefficient, as pursuing the offenders is complicated. Alternatively, training and education tools empower individuals with knowledge and guidance.

The other major category for fraud prevention tools is technological tools. The authors of [3] propose two major categories for these methods: blacklist methods and heuristic methods. The first approach proposes preventing attacks based on prior suspicious instances of a given element, such as blocking IP addresses previously associated with cyberattacks. Heuristics employ specific criteria to analyze the observed behavior, such as blocking an email as spam based on specific keywords.

Fraud prevention systems must be broad and general to cover as many fraud scenarios as possible. However, as the authors [2] report, these systems are not always enough and may occasionally be breached.

Fraud detection systems, as defined in [2], provide a second layer of defense after fraud prevention systems. These systems usually monitor the system to identify fraudulent activities and report them to an administrator. The authors identify two main categories of fraud detection systems: anomaly-based and misuse-based.

Anomaly-based fraud detection leverages the user's behavior as a mechanism for fraud detection. If there are significant deviations from the standard behavior, an alert is triggered to report a suspicious situation.

Misuse-based fraud detection takes a different path: the fraudulent behaviors are pre-specified (e.g., using a rule-based system), and any other behaviors are considered legitimate. This approach is highly targeted but requires experience and expert knowledge. Its main limitation is its inability to detect new or unknown illicit patterns.

In particular, these prevention and detection mechanisms are not proactive in applying mitigation and remediation strategies as countermeasures.

Access control systems are mechanisms for restricting access to valuable resources or assets, as defined in [4]. These systems decide whether or not to grant access based on user information. The countermeasure, however, is chiefly limited to blocking the access completely.

Another set of systems are the risk-based authentication systems. As described in [4], these systems are dynamic, as they adapt the access considering the situation at hand and its risk assessment. This article is one of the first ones proposing the evaluation of the current situation to decide on access to the information, in contrast with previous proposals that were static and indifferent to the context.

A critical aspect of the risk-based authentication systems is the definition and assessment of the risk. In [5] the authors explore a novel strategy for risk assessment. Notably, they balance trust in the user with the risk of the resource. The decision is later reassessed based on the resulting outcome, increasing or decreasing the trust in the user and improving the system over time.

Specific studies are data-centric and focus on the data requirements to calculate the risk. For instance, the authors of [6] propose a combination of mouse movements and keystrokes dynamics as a source for the risk estimation. The authors claim that biometrical information is harder to spoof and propose it as a more robust solution.

Most risk-based authentication systems provide the countermeasure of disconnecting the end user or stopping the current session, with just a few exceptions asking for re-authentication. Most of the work focuses on risk assessment but leaves open the application and implementation of possible countermeasures.

Whereas access control systems focus on access to particular assets, intrusion detection systems, as defined by [7], are broader as they cover the detection of any attack on the system.

The authors of [7] divide these systems based on detection method, behavior on detection, and audit capabilities. Detection methods can leverage the user's behavior or other types of information, such as the user's IP. The behavior on detection concerns what to do in the case of intrusion detection. It can be passive if it does not deploy mitigation actions or active if it does. The authors do not mention specific implementations or countermeasures.

One of the most referenced intrusion detection systems is the SPARTA framework presented in [8] that provides threat modeling and user-defined countermeasures. Its main functionality is pattern matching to detect threats. Once there is a match, there is the execution of a risk assessment and application of the defined countermeasure. Ultimately, SPARTA leaves the implementation, the risk evaluation, and the impact of each countermeasure to the user.

Other countermeasures are known, for example, the authors of [9] propose a list of high-level countermeasures and recommendations for a variety of cyberattacks. In [10], the authors also define and cover the most common cyberattacks, and for each of those, they suggest countermeasures that could be applied. These proposals tackle mainly prevention and do not focus as much on remediation or termination of the attack. Also, these countermeasures are set and forget, as there is no further evaluation of their impact.

The authors of [11] show the functioning of a second factor authentication mechanism for mobile payments, and the threats that can affect to this schema. This study shows an interesting aspect: it proves that even a countermeasure such as a second factor authentication can be attacked. This study shows the importance to have the adequate countermeasures for the specific use case, and also proves that the circumstances around the interaction of a countermeasure should be valued.

Other solutions specialize in mobile devices. In [12], the authors describe a method to apply countermeasures in case someone is performing unauthorized access to a device. The system creates a model of the user's behavior to check for anomalies. If an anomaly is detected, it triggers a countermeasure. The countermeasures are not specified, nor the context in which they apply.

The work in [13] presents a more granular approach concerning countermeasures. The authors define a process of identifying different assets of a computing system. The user can define which countermeasure should be applied to which asset for a specific vulnerability. The main limitation of this approach is that it requires a definition of countermeasure per device, specifying which threats to mitigate, and therefore, being valid only for known vulnerabilities. Also, they consider the application of the immediate countermeasure to the end goal without considering further reactions of the user.

Focusing on the selection of countermeasures, the authors of [14] show a system able to balance the perceived risk with the potential impact of large scale cyberattacks. The system is able to identify all resources exposed to possible cyberattacks and calculates the risk of those resources being attacked. At the same time, the system selects the best countermeasure based on the cost of applying that countermeasure compared versus the resource risk. For calculating the cost of the employment of the countermeasure, the system simulates its application and quantifies its impact. This system offers the novelty of simulating the cost, however, this approach is only valid for those cases where the impact of the countermeasure can be estimated beforehand. Also, the authors do not consider the possibility of applying more than one countermeasure or the reactions to the applied countermeasures.

Most of the literature focuses on the decision part of the system. However, many of these studies lack details about active protection: the application of countermeasures to prevent or mitigate attacks. Often there is no in-depth explanation of the available countermeasures and when to apply them. Often, the one countermeasure provided is denying access. Moreover, the possibility of applying more than one countermeasure, either in parallel or sequentially, is typically not considered.

In summary, electronic activities are increasing thanks to the ubiquity of computational devices as well as the general and broad access to the Internet. These innovations have opened the doors to the access of services that previously were only available in the physical world. However, this has also brought the opportunity for malicious actors to illegitimately benefit from these digital services.

As a response to this fraudulent threat, different existing defense systems have been presented herein, and how they do not exploit all their potential, as they often limit themselves to disconnecting the user whenever there is a risk suspicion. This decision, if effective from the point of view of stopping the commitment of the fraud, carries the costly side effect of impacting to the usage of those non fraudulent users that may be misclassified by the system. These errors may cause a considerable damage to the user trust on this digital services.

US2020401689A1 discloses a system for providing resource monitoring and transmitting electronic alerts using event-based triggers, based on a user's identity, that the user requires additional security and monitoring products and/or services with respect to the user's account. In this regard, the system may continuously monitor the user's activity (e.g., to monitor a resource associated with the user account). The system may further define user events which may trigger the transmission of electronic alerts sent to computing devices of the user and/or third parties associated with the user. However, it does not disclose marking the online client-server session as an affected session, a client device requesting a client-initiated countermeasure, nor a client device requesting a client-initiated countermeasure.

These facts are disclosed in order to illustrate the technical problem addressed by the present disclosure.

### GENERAL DESCRIPTION

This document presents a Continuous Active Defense method and system for applying one or more countermeasures, and to actively capturing the reactions to these countermeasures, for online session security.

In an embodiment, a loop captures the reactions and uses them as a new source of information. This feature opens a new path of interacting with the user, retrieving feedback immediately while actively protecting the defended assets. This allows for better-informed decisions, which lead to more adequate countermeasures.

A continuous active defense system capable of applying countermeasures and closing a loop by capturing the end user's reactions. The countermeasures are not limited to protecting the system but also actively gathering information, enabling more granular, better countermeasures.

The present document discloses a method for securing an online client-server session between a client device and a server device by application of at least a countermeasure comprising a predetermined session-security challenge-response pair, the method comprising the steps of: the server device collecting client behavior pattern during the online session; the server device marking the online session as an affected session according to a pre-agreed client-server protocol, wherein affected is defined as a risky client behavior pattern, i.e. independently of any server-client contact, e.g., triggering a particular trigger condition by the server device based on at least in part the collected client behavior pattern during the online session; the client device requesting a client-initiated countermeasure according to the pre-agreed client-server protocol, i.e. independently of any server-client contact; i.e. these actions of marking and requesting countermeasure are asynchronous, the server device responding with an indication of a particular countermeasure to be carried out by the client device; the client device carrying out the indicated particular countermeasure and sending to the server device a reaction to the countermeasure; and, the server device verifying the client reaction to the countermeasure, and if verified, marking the online session as non-affected.

In an embodiment, the method further comprising the steps of: if the client reaction to a countermeasure is not verified, the client device requesting an additional client-initiated countermeasure according to the pre-agreed client-server protocol; the server device responding with an indication of a particular additional countermeasure to be carried out by the client device; the client device carrying out the indicated particular additional countermeasure and sending to the server device a reaction to the additional countermeasure; and, the server device verifying the client reaction to the additional countermeasure, and if verified, marking the online session as non-affected, i.e., the method for carrying out additional countermeasures can be repeated.

In an embodiment, the pre-agreed client-server protocol comprises triggering the steps of marking and requesting a countermeasure when: a particular client behavior pattern occurs during the online session; and/or a periodic time period occurs during the online session.

In an embodiment, the client behavior pattern includes at least one selection from the group consisting of: an estimated security risk above a predetermined threshold, in particular an estimated risk of illicit account takeover above a predetermined threshold; a particular device characteristic or characteristics; a particular user journey; a particular user interaction; a particular set of user interactions; and a lack of a particular user interaction.

In an embodiment, the client device requesting a client-initiated countermeasure according to the pre-agreed client-server protocol is synchronized with predetermined online session events, in particular the predetermined online session events comprising login of the online session, window focus loss of the online session, or combinations thereof.

In an embodiment, the particular countermeasure to be carried out by the client device is selected from a list comprising: blackening screen capture by adjusting screen capture permissions; completing a challenge response, in particular comprising text-completion challenge, mouse movement challenge and/or image classification challenge; carrying out a two-factor authentication challenge; and logging out the online session, typically followed by logging-in if the user is legitimate.

In an embodiment, the online client-server session is pre-authenticated.

In an embodiment, the server device marks the online session as an affected session according to a pre-agreed client-server protocol, without sending an indication of the affected status to the client.

In an embodiment, the online session is a client-server web session and the client device runs a web browser arranged to carry out the client device side of the method.

In an embodiment, the server-device is arranged to serve a web page comprising computer program instructions that when run on the client device cause it to carry out the client device side of the method.

In an embodiment, the online session is a client-server application session and the client device runs an application comprising an application library arranged to carry out the client device side of the method.

In an embodiment, an indication of sessions marked as affected are stored in a dynamic cache with a time-limited read period, or in a queue, or in a database.

In an embodiment, the method further comprising providing a countermeasure service for the server device to respond with an indication of a particular countermeasure or countermeasures to be carried out by the client device, wherein said countermeasure service is a client-initiated polling service.

In an embodiment, a session marked as affected has a corresponding countermeasure or countermeasures stored in a countermeasure database.

In an embodiment, the countermeasure or countermeasures available for a session marked as affected are determined by one or more triggers at the server device when the online session is marked as an affected session according to the pre-agreed client-server protocol.

In an embodiment, one or more triggers are contained in a rule database where, for each rule, a corresponding countermeasure is enabled or disabled according to a predetermined condition or conditions.

In an embodiment, communications between server device and client device are encrypted.

It is further disclosed a non-transitory computer-readable medium comprising computer program instructions for securing an online client-server session between a client device and a server device, which when executed by a processor, cause the processor to carry out any of the described methods.

It is also disclosed, a computer system comprising the previously described computer-readable medium.

It is further disclosed, a system comprising a client device and a server device, for securing an online client-server session between the client device and the server device by application of at least a countermeasure comprising a predetermined session-security challenge-response pair, the system being arranged to carry out the steps of: the server device collecting client behavior pattern during the online session; the server device marking the online session as an affected session according to a pre-agreed client-server protocol, wherein affected is defined as a risky client behavior pattern, i.e. independently of any server-client contact; the client device requesting a client-initiated countermeasure according to the pre-agreed client-server protocol, i.e. independently of any server-client contact; i.e. these actions of marking and requesting countermeasure are asynchronous, the server device responding with an indication of a particular countermeasure to be carried out by the client device; the client device carrying out the indicated particular countermeasure and sending to the server device a reaction to the countermeasure; and, the server device verifying the client reaction to the countermeasure, and if verified, marking the online session as non-affected.

### BRIEF DESCRIPTION OF THE DRAWINGS

The following figures provide preferred embodiments for illustrating the disclosure and should not be seen as limiting the scope of invention.
Figure 1: Diagram representation of an embodiment of a system for securing an online connection.
Figure 2: Schematic representation of an embodiment of a system's architecture for securing an online connection.
Figure 3: Schematic representation of an embodiment of a remote access tool protection.

### DETAILED DESCRIPTION

Instead of blindly disconnecting the user, herein it is disclosed a method, and respective system, that actively takes advantage of multiple countermeasures.

In an embodiment, it is proposed a reactive system that adapts to the sequential nature of attacks and countermeasures in adversarial settings, such as digital fraud. Whenever the system deploys a countermeasure, there is a reaction from the user's device. For example, if an anomalous location for the user's connection is detected, the system triggers some silent countermeasure to identify the device. With the response, the system would analyze if the device is legitimate. If the response still presents uncertainty, the system could require a more intrusive countermeasure, such as, for example, asking the user to type a code in a text box. The user would react by performing the required keystrokes. These keystrokes, however, contain information about the active user, such as typing patterns, that can inform better risk assessments, resolving the previous uncertainties.

Hereby, the digital defense is framed as a sequential game, more akin to chess, Go, or turn-based strategy games, and not as a simultaneous one, where players select strategies without knowledge about other players' actions, such as, to give an illustrative example, rock-paper-scissors.

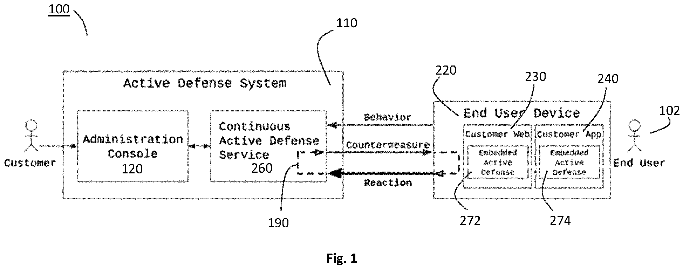

The proposed system captures in real time the reactions to the deployed countermeasures to perform better decisions at each round. The continuous active defense loop consists of deploying a countermeasure, capturing and analyzing the user device's response, and deciding if and how to counter. The loop 190 is illustrated in the schematic of Fig. 1, extending between the end user device 220 to the active defense system 110. To be clear, the capture, analysis, decisions and deployment of countermeasures are among the various actions taken by the system under control of a processor executing suitable code.

**Figure 1** shows a diagram representation of an embodiment of a system 100 for securing an online connection.

In an embodiment, the system uses these reactions and the collected behavior to improve the accuracy of an intelligence component 268 in real time. In an embodiment, the system 100 can be implemented as rules based on expert knowledge and adapted over time with this information. In another embodiment, the system 100 is implemented as a machine learning model based on the historical data about collected behavior, applied countermeasures, and observed reactions Using the countermeasure reactions as part of the intelligence data is a differentiating factor, as it boosts the real time adaptability of the disclosed approach.

The proposed system enables continuous real time action-response interaction between users and digital defenses while collecting more data about users, attack patterns, and the effectiveness of different countermeasures in specific contexts.

The presented embodiments are particularly important, not only in financial fraud but also in other cybersecurity areas, such as network protection or intrusion detection.

The disclosed Continuous Active Defense thus comprises a system to evaluate the risk of a user's session and trigger adequate, client-defined countermeasures. Once the system deploys a countermeasure, it can analyze the observed reaction and decide what further actions to apply, if any.

Consider an end-user 102 of certain digital services. For instance, in the case of digital banking, the end-user would have credentials to access the bank's website or mobile application. The user may use its credentials to access the account and perform different actions, such as checking the balance, modifying personal information, or doing transfers and payments. The risk, however, is that, somehow, the user may be compromised.

In an embodiment, the Continuous Active Defense method and system 110 integrates with websites or dedicated applications to offer continuous protection across the user journey so that users can benefit from the convenience of digital services without compromising security.

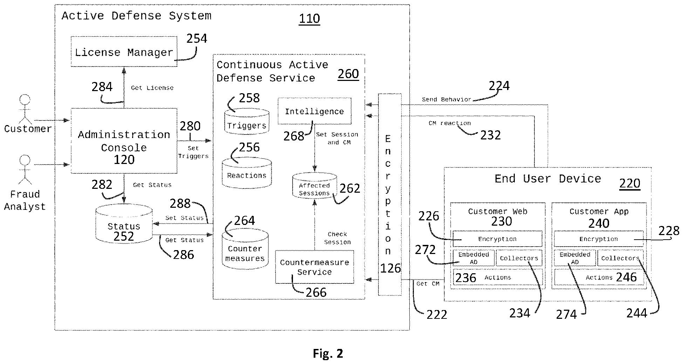

**Figure 2** shows a schematic representation of an embodiment of a system's architecture for securing an online connection.

In an embodiment, the Active Defense components in the end-user device 220 capture relevant actions and send them to the system 110 for analysis. The device 220 also requests countermeasures 222 for the active session. All communication between the device 220 and the system 110 is preferably encrypted by encryption modules 226, 228, 126, each of which comprises code executing within a processor, ensuring user privacy and data integrity.

The device 220 sends in real time the data including behavior data 224 to the system. The device 220 is also responsible for calling (requesting) the system to pull the countermeasures. The pull model integrates the disclosed method and system within the normal functioning of the digital service without unnecessary disruptions or friction while optimizing the available resources. Moreover, the device has the appropriate context to decide when to request countermeasures 222. For instance, the risk may be higher when a user is accessing a payment view or changing personal details. These actions may warrant a check to understand what countermeasures should be applied, if any, to ensure security.

The disclosed method and system 110 is responsible for decrypting and evaluating incoming data against a set of policies that may include, among others, blocklists, rules, or machine learning models. These policies aim to estimate the risk of the active session based on the observed user and device behavior and decide what countermeasures to apply.

The policies are customer-defined and managed through the Administration Console 120, including Triggers and Countermeasures. The console, in some embodiments, also access the system's Status 252. The License Manager 254 manages access privileges.

In an embodiment, a continuous active defense service ("CADS") 260 operates as part of the active defense system 110 once the active defense system 110 decides on a countermeasure, it does not apply it immediately, for that would ignore the current context of the session. In fact, at that moment, the user's device 220 is unaware of the countermeasure. Instead, the system places the session and the corresponding countermeasure in a list of Affected Sessions 262. The device should pull countermeasures stored in a countermeasure database 264 using a countermeasure service 266 whenever necessary by querying the system. The pull model decouples decision-making from executing the countermeasures, ensuring independence and the ability to scale separately.

The end user device 220 executes the necessary actions if countermeasures exist and collects the response either from browsing a website 230 or from end-user apps 240, using collectors 234, 244, respectively. The response 232 provided by the end user device 220 to the CADS 260 informs the re-evaluation of the risk and, when applicable, additional countermeasures. The ability to collect and operate on user reactions 232 to applied countermeasures enables the creation of an action-reaction feedback loop. Notably, it allows for dynamic, multi-step defense strategies and increased interactivity with the user 102. It also allows for more informed decision-making, as user reactions constitute important data points to assess the session's risk. Moreover, the record of countermeasures and responses may contribute to defining better risk policies in the future.

The Device stands for the end user's physical device. Digital service providers may embed the disclosed method and system in their websites 230 or dedicated applications 240.

In regard to the Customer Website, the customer offers digital services to the user through a website 230 accessed from the end user device 220. Typically, the user accesses the digital services through a web browser. The customer may integrate the disclosed method and system code, usually JavaScript, in relevant web pages. The browser can run it locally and communicate with the disclosed method and system whenever necessary, assuming a functional Internet connection.

The sequence of user actions 236 while browsing the website, from the first arrival to, eventually, stopping using it (e.g., by going to another website or inactivity), constitutes a session. Through the web browser, the device 220 pulls 222 and executes countermeasures from the disclosed method and system throughout the session. The user behavior 232 during the session informs the countermeasure service 266.

A dedicated costumer application 240, commonly referred to as an app, is a type of software that runs on mobile devices, such as smartphones or tablets. In a particular embodiment, the app 240 directly integrates the Embedded components of the disclosed method and system, including encryption 228, collectors 244 and actions 246, typically through a Software Development Kit (SDK) that packages all the necessary components and functionality.

Customer apps 240 allow direct interaction with the disclosed method and system and are not subject to the capabilities of a web browser. Instead, the operating system (OS), such as Android or iOS, provides the framework.

As in a web session, an application session corresponds to all user actions while using the app, from arrival to departure (e.g., closing the app, executing a task) or inactivity.

The device 220 collects and sends user actions to the Active Defense System 110, including biometrics (e.g., clicks, keystrokes, or mouse movements), behavior (e.g., user journey), and device information, collectively illustrated as being sent over the communication link 224 from the device to the system. Typically, browsers can access, among other things, IP address, user interactions with websites (e.g., clicks, time on page), browsing history, and browser and device information. The data collection capabilities of the browser are limited to the information available.

Alternatively, apps 240 may collect more contextual information about what is happening outside the app. For instance, the app may track physical location, interactions with the device (e.g., touches and presses), the device's state (e.g., charging, locked), or the installation of other applications. Moreover, it is possible in portable devices to collect sensor data, including orientation, proximity, or microphone and camera information under certain conditions. Thus, apps have extended data collection capabilities compared to websites accessed through a browser, and all of that data can be collected over the communication link 224.

In an embodiment, the collectors 234, 244 are responsible for capturing user actions, including relevant context, and sending them to the Active Defense System 110. They integrate directly with the customer's website 230 or app 240 to capture the required information while ensuring a frictionless user experience.

Apps 240 allow broader data collection and enable more comprehensive risk assessments. Apart from that, despite differing implementation details, collectors 234, 244 operate similarly for web pages and apps. The system may dispatch the data at any time. It may happen periodically or following or preceding some action. For instance, a typical collector constructed in accordance with the present disclosure sends the data whenever the user leaves the current web page or view or accesses the next one.

An important aspect of the proposed collectors is the ability to capture user responses 232 to the applied countermeasures and share them with the Active Defense System 110, including the CADS 260. The resulting feedback loop allows the system to be dynamic and adjust to the observed responses sequentially.

In an embodiment, the Embedded Active Defense component 272, 274 (or module) included in the website 230 or app 240 interacts in real-time with the Active Defense System 110 to pull and apply applicable countermeasures for the active session.

On the one hand, this component 272, 274 communicates in real-time with the Active Defense System 110 at any moment to request countermeasures for the active sessions. Based on the risk assessment of the session, performed separately by the Intelligence component 268 previously detailed, the Active Defense System 110 may or may not return countermeasures for the session over the link 222. The communication may happen at important moments during the session, periodically, or both.

On the other hand, this 272, 274 component requires the ability to execute the actions corresponding to the countermeasures defined by the Continuous Active Defense Service 260. For instance, the countermeasure might be requesting two-factor authentication or termination of the session. Naturally, the device's context, notably the browser for web pages or the operating system for apps, limits the available actions. As mentioned in previously, the user's response to the countermeasures 232 is sent back to the Active Defense System by the collectors 234, 244.

Typically, a more comprehensive range of interventions is available to apps through the operating system's API. An illustrative example is the ability to close the application altogether, ending all the processes and cleaning all the current session data.

The device encryption component 226, 228 is the device counterpart of Active Defense's Encryption Component 126. It protects the communication between the device and the system by encrypting information locally before sending and decrypting all received messages. Encryption is mandatory to ensure communication safety over the internet and applies to web pages and apps.

The disclosed method and system enables interaction with the system's components and delivers security countermeasures to the user's device 220 based on the risk assessment of the session. This system may contain several components, as discussed previously.

The communications between the device and Active Defense System over the internet should be protected. The Encryption component decrypts incoming requests and encrypts outgoing responses to preserve user privacy and data integrity.

Encryption is important in building trust within the system: it ensures the security of user and customer data and the integrity of the data transmitted between the device and the Active Defense Service. Frequently, network communications use the Transport Layer Security (TLS) protocol to ensure security.

The Continuous Active Defense Service 260 is important for the Active Defense System 110. The Intelligence component 268 monitors the risk of a session in real-time, based on user-defined (costumer and/or fraud analyst) Triggers and corresponding Countermeasures. The Countermeasure Service 266 answers device requests for countermeasures 222 for the active session. The list of Affected Sessions 262 mediates the connection between the Intelligence component 268 and the Countermeasure Service 266: the first writes the affected sessions and the corresponding countermeasures for the latter to read upon request from the device.

In an embodiment, the Intelligence component 268 receives a constant flow of user actions and evaluates them against its configuration. It can also access user Reactions to previously applied countermeasures. Thus, the disclosed method and system enable dynamic analysis and countermeasures rather than static policies. If a session meets at least one of the criteria, the Intelligence component 268 places it in the Affected Sessions list.

In an embodiment, the device 220 should inquire of the system 110 for countermeasures. These requests 222 may occur at different points, including important session moments, such as visits to the login or transfer views in a banking application. They can also occur periodically, for example, every few seconds. The final goal is to enable the service to monitor the session in real-time and whenever appropriate. The Countermeasure Service 266 is responsible for receiving the requests 222, after decrypting by the encryption module 126, checking the Affected Sessions list 262 and the system's Status 252, and responding with the proper countermeasures, if they exist. The service should notify the device 220 if there are no countermeasures for the session.

As mentioned above, the service may store all interventions (Status 252) and corresponding user responses (Reactions 256). Each time a countermeasure is applied, the device may send back the observed reaction 232 to the system. Upon receiving this feedback, which is decrypted by the encryption module 126, the Intelligence component 268 may re-evaluate the session and decide whether to react and trigger 258 additional countermeasures. Hence, it enables one of the defining characteristics of the system: a dynamic feedback loop that fits digital defense's adversarial nature.

In an embodiment, the Intelligence component 268 is responsible for decision-making. Firstly, during the configuration stage, it may receive a user-defined list of triggers 258 and corresponding countermeasures 264. Then, at inference time (that is, during an active session), it receives the signals from the device 220 and evaluates them against the user-defined configurations. Ultimately, the Intelligence component 268 aims to evaluate the risk of a session at any point in time.

The Intelligence component 268 encapsulates a variety of non-exclusive risk assessment strategies. In some applications, the CADS 260 may check a user or device blocklist. It may also consist of more complex, user-defined rules that encode expert knowledge on what constitutes risky behavior. Increasingly, it may also contain a machine learning model trained to discriminate between legitimate and suspicious behavior. After deciding on countermeasures 264, the Intelligence component 268 sends them to the Affected Sessions component 262 as described.

After countermeasures are applied, the end-user device 220 sends back the observed reaction 232. The reaction information is fed to the Intelligence component 268, triggering a new round of countermeasures whenever applicable. The Intelligence component may use any number of past reactions at any point in time, that are known to the Countermeasures Reactions storage component 256, which is detailed later on.

This component 256 allows asynchronous communication between the Intelligence component 268 and the Countermeasure Service 266. As a result, each component can scale separately. It also allows each component to write and read at its pace and therefore not interfere with or interrupt each other tasks.

A possible implementation of the Affected Sessions component 262 is a dynamic cache, where the Intelligence component 268 would write, and the Countermeasure Service 266 would have a limited time to read. Another option is using a queue, where the Intelligence component 268 would store the affected sessions 262 to be consumed by the Countermeasure Service 266. Alternatively, it may be a permanent database where the Intelligence component 268 would store the affected sessions 262, and the Countermeasure Service 266 would query for countermeasures 264.

The Countermeasure Service 266 operates on a polling model. Whenever necessary and based on user-defined configurations, the End User Device 220 calls and asks the Continuous Active Defense Service 260 for countermeasures 264 for the current session.

Upon request, the service 260 firstly queries the Affected Sessions 262 component for applicable countermeasures 264, as decided by code implementing the Intelligence component 268. Secondly, the service 260 checks the Status component 252 to understand whether they were already applied. Finally, if novel countermeasures exist, it sends the countermeasures back to the device and updates the Status accordingly.

If there are no countermeasures for the current session, the Countermeasure Service 266 notifies the device 220 that there is nothing to do at that time.

The Triggers component 258 stores the customer-defined triggers. The Intelligence component 268 refers to it to activate the corresponding countermeasures. A possible implementation is a rules database where the assigned countermeasure should be activated or deactivated for a session based on one or more conditions. For instance, the customer could define a trigger that would terminate a user's session once the level of risk surpasses a certain threshold.

The Countermeasures component 264 stores the available countermeasures as defined by the customer. Each entry contains the information required by the device 220 to execute the countermeasure. For example, the Countermeasures component could be a database containing countermeasures and parameters.

The Reactions component 256 represents storage for all user reactions to the applied countermeasures. It stores user and device information gathered in response to the prompted security action. It may be a database where each entry contains identifiers for the user, session, and countermeasure, timestamps of the countermeasure and the reaction, and any other relevant information. For example, if the countermeasure were a mouse dynamics challenge, additional information could include the mouse movement's speed.

The Administration Console component 120 enables monitoring and managing of the Continuous Active Defense System 260. The console 120 needs to cover at least the three main requirements. First, it needs to support the customer's definition of triggers provided over communication link 280 to the CADS 260 and countermeasures. Second, it needs to allow the customer to observe the current status of each session by suitable polling over communication link 282, including deployed countermeasures. Finally, it requires proper access control through the License Manager 254, including security and user management capabilities over communication link 284.

The Status component 252 stores the current status of each session so that the Continuous Active Defense Service 260 and the Administration Console 120 can consult it. It should keep track of all applied countermeasures, the triggers that originated them, and the corresponding user reactions. There is some redundancy between the Status and the Affected Sessions components, for they both store countermeasures. An important difference, however, is that the system may not apply some countermeasures. For example, maybe there were no requests from the device within a reasonable timeframe, or more recent countermeasures replaced some outdated ones.

Unlike the Affected Sessions component, the Status keeps track of the applied countermeasures (i.e., the ones effectively dispatched to the device for execution) and the observed response. It has communication links with the CADS 260, e.g. to get 286 and set 288 the status for sessions, devices.

The License Manager 254 is responsible for managing what customer users or personas can interact with what parts of the Administration Console 120. For instance, the console may require multiple access levels, as not all customer users should be able to update triggers or countermeasures (but some should). Similarly, maybe different customer users require different levels of access to the system's status.

The present disclosure has several potential implementations, namely as a remote access tool blocker.

As mentioned in Feedzai's recent Financial Crime Report [1], the most prevalent type of financial fraud is account takeover (ATO), which consists of an attacker taking over a legitimate account. In short, the attacker gains access to the user's account (e.g., by stealing the victim's login credentials) and can steal funds and information.

Many of these attacks share a typical pattern: the attacker's use of a remote access tool (RAT) to control the victim's device. Importantly, from the point of view of the service provider, the end user device 220 is the one accessing the service, using proper authentication. Hence, ATO successfully mimics legitimate usage, and it is hard to shield services from it. Additionally, there are legitimate uses of RATs to manipulate devices remotely, such as troubleshooting.

Thus, a product relevant to this use provides a possible implementation of the disclosed method and system to protect financial institutions and other digital services from account takeover fraud using RATs.

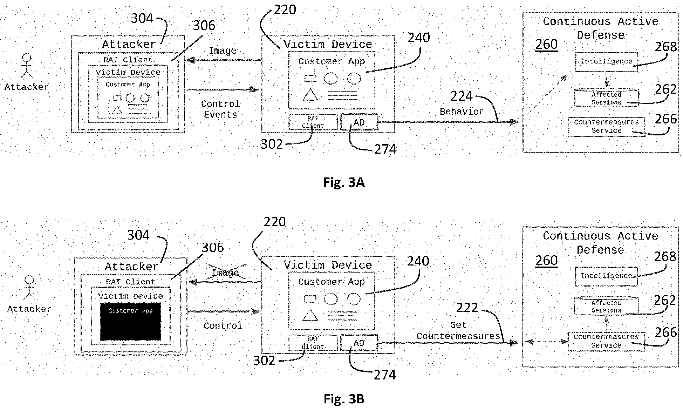

Figures 3A and 3B illustrate a schematic representation of an embodiment of a remote access tool protection.

Figure 3A represents an attacker taking control of the victim's device using a RAT 302. The attacker can access the device's screen and control events remotely using a remote device 204 which is running a RAT control program 306. Therefore, the attacker can access digital services through the user's device and impersonate the user to take over, for example, a bank account.

The collectors send information 224 back to the system 260 throughout the session. The Intelligence component 268 is responsible for evaluating the risk of the session based on the received signals and continuously recommending countermeasures, when applicable. The Intelligence component 268 preferably detects the risk of account takeover and recommend adequate countermeasures as soon as possible.

In an embodiment, the Intelligence component 268 includes one or more statistical or machine learning models, or a rule-based model, to assess the risk of the session based on incoming data. The models can estimate the overall risk of the session. However, they can also be specialized, for example, to assess, specifically, the usage of a RAT or the risk of account takeover. Finally, the Intelligence component checks the collected signals and the model scores against the customer-defined triggers to define what countermeasures to apply.

In this case, the Intelligence component combines biometric information with other data points, such as the active view (e.g., changing personal details, transfers, or payments), transfer or payment timestamps or amounts, among other factors. Biometric information, including mouse movement, clicks, and keystrokes/typing information, is relevant, as well as touches or swipe gestures in mobile devices. For instance, the Embedded Active Defense module 274 may detect (almost) simultaneous clicks in different places with no movement. That could indicate that there may be a local user and a remote user using a RAT 304. Another illustration is that, often, there is a noticeable lag in remote sessions, for example, in keystrokes (key up and key down times), leading to different patterns leveraged by, e.g., statistical and machine learning models, as well as expert rules.

Once the Intelligence component 268 detects the risk of account takeover, it sends the appropriate countermeasures to the Affected Sessions database 262. Figure 3B illustrates what happens when the device 220 has requested countermeasures, e.g., before authorizing a transfer. The Embedded Active Defense component 274 gets the countermeasures over the link 222 from the Active Defense System 260 and is responsible for executing them. In this case, due to the high risk of account takeover, the device immediately applies the "blacken recording" countermeasure, which turns the screen at the remote device 304 to be black to the attacker, who loses visibility of the victim's device 220.

Finally, the device 220 sends back the observed reaction over communication link 224, and the Intelligence component 268 evaluates the effectiveness of the intervention and decides on additional countermeasures. For instance, if the countermeasure did not stop the transaction's progress, a more strict countermeasure such as the total disconnection of the user may be deployed.

Some examples of countermeasures are available to the Active Defense System 260, such as blacken recording, challenge completion, device, informative, multi-factor authentication, and logout.

The Blacken recording method consists of adjusting screen capturing permission. For instance, upon meeting certain conditions, access could be entirely blocked. This countermeasure aims to protect from attacks attempting to capture the legitimate user's screen, most notably Remote Access Tool (RAT) 302 attacks. In the event of launching the countermeasure while an attacker is capturing the screen, the attack would stop, for the attacker would lose visibility. Importantly, there is no impact on the end-user, who may be able to continue to use the device without friction.

The challenge completion countermeasure entails a challenge that the end-user should complete. This countermeasure aims to collect data in a controlled scenario. One possible challenge is to prompt the user to write the text displayed on an image to collect biometrical information from the keystrokes over a controlled text. With this information, the Intelligence component could compare this reaction with previous reactions and search for possible anomalies, and in that case, serve another more restricting countermeasure. One may also request the user to move the mouse or the device according to a particular pattern. In the meantime, the system may gather the movements and sending reactions 224 back to the Active Defense System 260 to process the information and try to detect anomalies.

The device characterization countermeasure is one of the countermeasures known to the countermeasures database 264, and when utilized it executes an action on the device. Its main advantage is subtleness. For example, the system may run a particular computation and measure the device's performance. Once this information about the device is collected, it is sent as a reaction back to the Active Defense System to perform further analysis and apply further countermeasures if needed. If appropriately performed, these countermeasures should not cause significant usability degradation on the device.

The informative countermeasure objective is one of the countermeasures known to the countermeasures database 264, and when utilized it communicates something, e.g., information or instructions, to the user. The service could report a message to the device user, for instance. The method of communication includes but is not limited to pop-up messages. In some situations, a lesser invasive countermeasure is due, and an informative solution is adequate. The Active Defense System may employ more severe countermeasures based on the observed outcome.

A more invasive countermeasure would be a Multi-Factor Authentication (MFA) trigger, another countermeasure known to the countermeasures database 264. The method implemented by this countermeasure consists of forcing a cross-device challenge for the end-user to execute. The service could report and activate a multi-factor authentication challenge to the device user and lock the ensuing usage of the service prior to the challenge completion. The challenge should be a holistic validation cross-device, such as a password introduction on a different, known device.

The logout countermeasure is another countermeasure known to the countermeasures database 264, and it consists of disconnecting from the service. The method restricts access and navigation. More severe countermeasures, such as permanently blocking particular actions or subsequent access, may follow.

In relation to the actors who interact with the Active Defense System and their motivations there are end users, customers, and fraud analysts.

The end users refers to the actual person interested in the usage of the Customer Service. For instance, this person could be the user of a banking website or application. In this case, the interaction of this actor with the Active Defense System is indirect. The Collectors explained in this disclosure are the ones responsible of capturing the needed information to offer the Active Defense, without the end user noticing this collection.

The customer refers to the actor interested in providing the Active Defense to each of their end users. A customer could be any company, such as a financial institution like a bank, or any other interested party, such as merchants. The main interaction required by the Customer is to establish the condition of when and how each countermeasure is triggered. The Customer may also be interested in checking the current status of the system, knowing what is the status of each session and which countermeasures have been applied and which were the reactions to these countermeasures. The Customer interactions are handled by the Administration Console.

The Fraud Analysts are the experts on fraud who collaborate with the Customer. For that, they need to understand and analyze the suspicious sessions. Therefore, they need access to the status of each of these sessions. They achieve this goal by accessing to the Administration Console, where they may query the status and investigate each of the sessions and the active countermeasures, as well as the reactions to these countermeasures.

Opposingly to access control systems which primarily focus on the moment of the access, the disclosed method and system provide continuous monitoring with opportune countermeasure challenging and thus consider a comprehensive, client-defined range of events of interest.

The term "comprising" whenever used in this document is intended to indicate the presence of stated features, integers, steps, components, but not to preclude the presence or addition of one or more other features, integers, steps, components, or groups thereof.

The following claims set out the invention.

### References

[1] Feedzai. Feedzai Q2 2022 Financial Crime Report: "The RiskOps Age". https://feedzai.com/resource/feedzai-q2-2022-financial-crime-report/, 2022.
[2] Aisha Abdallah, Mohd Aizaini Maarof, and Anazida Zainal. Fraud detection system: A survey. Journal of Network and Computer Applications, 68:90-113, 2016.
[3] Antesar M Shabut, Khin T Lwin, and M Alamgir Hossain. Cyber attacks, countermeasures, and protection schemes-a state of the art survey. In 2016 10th International Conference on Software, Knowledge, Information Management & Applications (SKIMA), pages 37-44. IEEE, 2016.
[4] R McGraw. Risk-adaptable access control (radac). In Privilege (Access) Management Workshop. NIST-National Institute of Standards and Technology-Information Technology Laboratory, volume 25, pages 55-58, 2009.
[5] Riaz Ahmed Shaikh, Kamel Adi, and Luigi Logrippo. Dynamic risk-based decision methods for access control systems. computers & security, 31(4):447-464, 2012.
[6] Issa Traore, Isaac Woungang, Mohammad S Obaidat, Youssef Nakkabi, and Iris Lai. Combining mouse and keystroke dynamics biometrics for risk-based authentication in web environments. In 2012 fourth international conference on digital home, pages 138-145. IEEE, 2012.
[7] Hervé Debar, Marc Dacier, and Andreas Wespi. Towards a taxonomy of intrusion-detection systems. Computer networks, 31(8):805-822, 1999.
[8] Laurens Sion, Dimitri Van Landuyt, Koen Yskout, and Wouter Joosen. Sparta: Security & privacy architecture through risk-driven threat assessment. In 2018 IEEE International Conference on Software Architecture Companion (ICSA-C), pages 89-92. IEEE, 2018.
[9] Rabie A Ramadan, Bassam W Aboshosha, Jalawi Sulaiman Alshudukhi, Abdullah J Alzahrani, Ayman El-Sayed, and Mohamed M Dessouky. Cybersecurity and countermeasures at the time of pandemic. Journal of Advanced Transportation, 2021, 2021.
[10] A Jesudoss and N Subramaniam. A survey on authentication attacks and countermeasures in a distributed environment. Indian Journal of Computer Science and Engineering (IJCSE), 5(2):71-77, 2014.
[11] Guma Ali, Mussa Ally Dida, and Anael Elikana Sam. Two-factor authentication scheme for mobile money: A review of threat models and countermeasures. Future Internet, 12(10):160, 2020.
[12] Brian D. Laughlin, John William Glatfelter, and William David Kelsey. Mobile security countermeasures. EP3428819A1, 2017.
[13] Prasanna Ganapathi Basavapatna, Deepakeshwaran Kolingivadi, and Sven Schrecker. Userdefined countermeasures. US20130096980A1, 2011.
[14] Gustavo Gonzalez Granadillo and Hervé Debar. Selection of countermeasures against cyber attacks. US10419474B2, 2014.

## Claims

1. A method for securing an online client-server session between a client device (220) and a server device by application of at least a countermeasure comprising a predetermined session-security challenge-response pair, the method comprising the steps of:
the server device collecting client behavior pattern (224) during the online session;
the server device marking the online session as an affected session (262) according to a pre-agreed client-server protocol, wherein affected is defined as a risky client behavior pattern, the method being **characterised in that** it comprises:
the client device (220) requesting a client-initiated countermeasure (222) according to the pre-agreed client-server protocol;
the server device responding with an indication of a particular countermeasure to be carried out by the client device (220);
the client device (220) carrying out the indicated particular countermeasure and sending to the server device a reaction (232) to the countermeasure; and,
the server device verifying the client reaction (232) to the countermeasure, and if verified, marking the online session as non-affected.

2. The method according to the previous claim further comprising the steps of:
if the client reaction (232) to a countermeasure is not verified, the client device (220) requesting an additional client-initiated countermeasure (222) according to the pre-agreed client-server protocol;
the server device responding with an indication of a particular additional countermeasure to be carried out by the client device (220);
the client device (220) carrying out the indicated particular additional countermeasure and sending to the server device a reaction (232) to the additional countermeasure; and,
the server device verifying the client reaction (232) to the additional countermeasure, and if verified, marking the online session as non-affected.

3. The method according to any of the previous claims wherein the pre-agreed client-server protocol comprises triggering the steps of marking and requesting a countermeasure (222) if:
a particular client behavior pattern (224) occurs during the online session; and/or a periodic time period elapses during the online session.

4. The method according to the previous claim wherein the client behavior pattern (224) includes at least one selection from the group consisting of: an estimated security risk above a predetermined threshold, in particular an estimated risk of illicit account takeover above a predetermined threshold; a particular device characteristic or characteristics; a particular user journey; a particular user interaction; a particular set of user interactions; and a lack of a particular user interaction.

5. The method according to any of the previous claims wherein the client device (220) requesting a client-initiated countermeasure (222) according to the pre-agreed client-server protocol is synchronized with predetermined online session events, in particular the predetermined online session events comprising login of the online session, window focus loss of the online session, or combination thereof.

6. The method according to any of the previous claims wherein the particular countermeasure to be carried out by the client device (220) is selected from a list comprising:
blackening screen capture by adjusting screen capture permissions;
completing a challenge response, in particular comprising text-completion challenge, mouse movement challenge and/or image classification challenge;
carrying out a two-factor authentication challenge; and
logging out the online session.

7. The method according to any of the previous claims wherein the server device marks the online session as an affected session (262) according to a pre-agreed client-server protocol, without sending an indication of the affected status (252) to the client.

8. The method according to any of the previous claims wherein the online session is a client-server web session and the client device (220) runs a web browser arranged to carry out the client device side of the method and/or the online session is a client-server application session and the client device (220) runs an application comprising an application library arranged to carry out the client device side of the method.

9. The method according to the previous claim wherein the server-device is arranged to serve a web page comprising computer program instructions that when run on the client device (220) cause it to carry out the client device side of the method.

10. The method according to any of the previous claims wherein an indication of sessions marked as affected are stored in a dynamic cache with a time-limited read period, or in a queue, or in a database.

11. The method according to the previous claim further comprising providing a countermeasure service for the server device to respond with an indication of a particular countermeasure or countermeasures to be carried out by the client device (220), wherein said countermeasure service is a client-initiated polling service.

12. The method according to any of the previous claims wherein a session marked as affected has a corresponding countermeasure or countermeasures stored in a countermeasure database; preferably wherein the countermeasure or countermeasures available for a session marked as affected are determined by one or more triggers at the server device when the online session is marked as an affected session (262) according to the pre-agreed client-server protocol.

13. The method according to the previous claim wherein one or more triggers are contained in a rule database where, for each rule, a corresponding countermeasure is enabled or disabled according to a predetermined condition or conditions.

14. The method according to any of the previous claims wherein communications between server device and client device (220) are encrypted and/or the online client-server session is pre-authenticated.

15. A non-transitory computer-readable medium comprising computer program instructions for securing an online client-server session between a client device (220) and a server device, which when executed by a processor, cause the processor to carry out the method of any of the claims 1-14.

16. A computer system comprising the computer-readable medium of the previous claim.

17. A system comprising a client device (220) and a server device, for securing an online client-server session between the client device (220) and the server device by application of at least a countermeasure comprising a predetermined session-security challenge-response pair, the system being arranged to carry out the steps of:
the server device collecting client behavior pattern (224) during the online session;
the server device marking the online session as an affected session according to a pre-agreed client-server protocol, wherein affected is defined as a risky client behavior pattern, the system **characterised in that** it is arranged to carry out the steps of:
the client device (220) requesting a client-initiated countermeasure (222) according to the pre-agreed client-server protocol;
the server device responding with an indication of a particular countermeasure to be carried out by the client device (220);
the client device (220) carrying out the indicated particular countermeasure and sending to the server device a reaction (232) to the countermeasure; and,
the server device verifying the client reaction (232) to the countermeasure, and if verified, marking the online session as non-affected.

## Patentansprüche

1. Ein Verfahren zur Sicherung einer Online-Client-Server-Sitzung zwischen einer Client-Vorrichtung (220) und einer Server-Vorrichtung durch Anwendung mindestens einer Gegenmaßnahme, umfassend ein vorbestimmtes Sitzungssicherheits-Challenge-Response-Paar, wobei das Verfahren die folgenden Schritte umfasst:
die Server-Vorrichtung sammelt Verhaltensmuster des Clients (224) während der Online-Sitzung;
die Server-Vorrichtung markiert die Online-Sitzung als eine betroffene Sitzung (262) gemäß einem im Voraus vereinbarten Client-Server-Protokoll, wobei betroffen als ein riskantes Verhaltensmuster des Clients definiert ist und das Verfahren **dadurch gekennzeichnet ist, dass** es Folgendes umfasst:
die Client-Vorrichtung (220) eine von dem Client initiierte Gegenmaßnahme (222) gemäß dem im Voraus vereinbarten Client-Server-Protokoll anfordert;
die Server-Vorrichtung mit einer Angabe einer bestimmten Gegenmaßnahme antwortet, die von der Client-Vorrichtung (220) auszuführen ist;
die Client-Vorrichtung (220) die angegebene bestimmte Gegenmaßnahme ausführt und eine Reaktion (232) auf die Gegenmaßnahme an die Server-Vorrichtung sendet; und
die Server-Vorrichtung die Reaktion des Clients (232) auf die Gegenmaßnahme verifiziert und, falls verifiziert, die Online-Sitzung als nicht betroffen markiert.

2. Das Verfahren nach dem vorangehenden Anspruch, ferner umfassend die folgenden Schritte:
Wenn die Reaktion des Clients (232) auf eine Gegenmaßnahme nicht verifiziert wird, fordert die Client-Vorrichtung (220) eine zusätzliche von dem Client initiierte Gegenmaßnahme (222) gemäß dem im Voraus vereinbarten Client-Server-Protokoll an;
die Server-Vorrichtung antwortet mit einer Angabe einer bestimmten zusätzlichen Gegenmaßnahme, die von der Client-Vorrichtung (220) auszuführen ist;
die Client-Vorrichtung (220) führt die angegebene bestimmte zusätzliche Gegenmaßnahme durch und sendet auf die zusätzliche Gegenmaßnahme eine Reaktion (232) an die Server-Vorrichtung; und
die Server-Vorrichtung verifiziert die Reaktion des Clients (232) auf die zusätzliche Gegenmaßnahme und markiert, falls verifiziert, die Online-Sitzung als nicht betroffen.

3. Das Verfahren nach einem der vorangehenden Ansprüche, wobei das im Voraus vereinbarte Client-Server-Protokoll das Auslösen der Schritte des Markierens und Anforderns einer Gegenmaßnahme (222) umfasst, wenn:
ein bestimmtes Verhaltensmuster des Clients (224) während der Online-Sitzung auftritt; und/oder
ein periodischer Zeitraum während der Online-Sitzung abläuft.

4. Das Verfahren nach dem vorangehenden Anspruch, wobei das Verhaltensmuster des Clients (224) mindestens eine Auswahl aus der folgenden Gruppe enthält: ein geschätztes Sicherheitsrisiko oberhalb eines vorbestimmten Schwellenwerts, insbesondere ein geschätztes Risiko einer unerlaubten Kontoübernahme oberhalb eines vorbestimmten Schwellenwerts; eine oder mehrere bestimmte Eigenschaften einer Vorrichtung; einen bestimmten Benutzerablauf; eine bestimmte Benutzerinteraktion; eine bestimmte Reihe von Benutzerinteraktionen; und ein Ausbleiben einer bestimmten Benutzerinteraktion.

5. Das Verfahren nach einem der vorangehenden Ansprüche, bei dem die Client-Vorrichtung (220), die eine von dem Client initiierte Gegenmaßnahme (222) gemäß dem im Voraus vereinbarten Client-Server-Protokoll anfordert, mit im Voraus festgelegten Ereignissen einer Online-Sitzung synchronisiert wird, wobei die im Voraus festgelegten Ereignisse der Online-Sitzung insbesondere die Anmeldung der Online-Sitzung, den Verlust des Fensterfokus der Online-Sitzung oder Kombinationen davon umfassen.

6. Das Verfahren nach einem der vorangehenden Ansprüche, wobei die von der Client-Vorrichtung (220) auszuführende bestimmte Gegenmaßnahme, aus einer Liste ausgewählt wird, umfassend:
Schwärzen von Bildschirmaufnahmen durch Anpassung der Berechtigungen für Bildschirmaufnahmen;
Beantworten einer Aufgabe, insbesondere einer Aufgabe zum Ausfüllen eines Textes, einer Aufgabe mit einer Mausbewegung und/oder einer Aufgabe mit einer Bildklassifizierung;
Durchführen einer Aufgabe mit Zwei-Faktor-Authentifizierung; und
Abmeldung von der Online-Sitzung.

7. Das Verfahren nach einem der vorangehenden Ansprüche, wobei die Server-Vorrichtung die Online-Sitzung als eine betroffene Sitzung (262) gemäß einem im Voraus vereinbarten Client-Server-Protokoll markiert, ohne einen Hinweis des betroffenen Status (252) an den Client zu senden.

8. Das Verfahren nach einem der vorangehenden Ansprüche, wobei die Online-Sitzung eine Client-Server-Web-Sitzung ist und die Client-Vorrichtung (220) einen Web-Browser ausführt, der so gestaltet ist, dass er bei dem Verfahren die Seite der Client-Vorrichtung ausführt, und/oder die Online-Sitzung eine Sitzung einer Client-Server-Anwendung ist und die Client-Vorrichtung (220) eine Anwendung ausführt, die eine Anwendungsbibliothek umfasst, die so gestaltet ist, dass sie bei dem Verfahren die Seite der Client-Vorrichtung ausführt.

9. Das Verfahren nach dem vorangehenden Anspruch, wobei die Server-Vorrichtung so gestaltet ist, dass sie eine Webseite bereitstellt, die Computerprogrammbefehle enthält, die, wenn sie auf der Client-Vorrichtung (220) ausgeführt werden, diese veranlassen, bei dem Verfahren die Seite der Client-Vorrichtung auszuführen.

10. Das Verfahren nach einem der vorangehenden Ansprüche, wobei eine Anzeige der als betroffen markierten Sitzungen in einem dynamischen Cache mit einer zeitlich begrenzten Leseperiode oder in einer Warteschlange oder in einer Datenbank gespeichert wird.

11. Das Verfahren nach dem vorangehenden Anspruch, ferner umfassend das Bereitstellen eines Dienstes für Gegenmaßnahmen für die Server-Vorrichtung, um mit einer Angabe einer bestimmten Gegenmaßnahme oder Gegenmaßnahmen zu antworten, die von der Client-Vorrichtung (220) auszuführen sind, wobei der Dienst mit Gegenmaßnahmen ein von dem Client initiierter Abfragedienst ist.

12. Das Verfahren nach einem der vorangehenden Ansprüche, wobei eine als betroffen markierte Sitzung eine entsprechende Gegenmaßnahme oder Gegenmaßnahmen hat, die in einer Datenbank mit Gegenmaßnahmen gespeichert sind; wobei die Gegenmaßnahme oder Gegenmaßnahmen, die für eine als betroffen markierte Sitzung verfügbar sind, bevorzugt durch einen oder mehrere Auslöser an der Server-Vorrichtung bestimmt werden, wenn die Online-Sitzung als eine betroffene Sitzung (262) gemäß dem im Voraus vereinbarten Client-Server-Protokoll markiert wird.

13. Das Verfahren nach dem vorangehenden Anspruch, bei dem ein oder mehrere Auslöser in einer Datenbank mit Regeln enthalten sind, in der für jede Regel eine entsprechende Gegenmaßnahme entsprechend einer vorgegebenen Bedingung oder Bedingungen aktiviert oder deaktiviert wird.

14. Das Verfahren nach einem der vorangehenden Ansprüche, bei dem die Kommunikation zwischen der Server-Vorrichtung und der Client-Vorrichtung (220) verschlüsselt ist und/oder die Online-Client-Server-Sitzung im Voraus authentifiziert ist.

15. Ein nichtflüchtiges computerlesbares Medium, das Computerprogrammanweisungen zur Sicherung einer Online-Client-Server-Sitzung zwischen einer Client-Vorrichtung (220) und einer Server-Vorrichtung enthält, die, wenn sie von einem Prozessor ausgeführt werden, den Prozessor veranlassen, das Verfahren nach einem der Ansprüche 1-14 auszuführen.

16. Ein Computersystem, umfassend das computerlesbare Medium des vorangehenden Anspruchs.

17. Ein System mit einer Client-Vorrichtung (220) und einer Server-Vorrichtung zur Sicherung einer Online-Client-Server-Sitzung zwischen der Client-Vorrichtung (220) und der Server-Vorrichtung durch Anwendung von mindestens einer Gegenmaßnahme, die ein vorbestimmtes Sitzungssicherheits-Challenge-Response-Paar umfasst, wobei das System so eingerichtet ist, dass es die folgenden Schritte ausführt:
die Server-Vorrichtung die Verhaltensmuster des Clients (224) während der Online-Sitzung sammelt;
die Server-Vorrichtung die Online-Sitzung als eine betroffene Sitzung gemäß einem im Voraus vereinbarten Client-Server-Protokoll markiert, wobei betroffen als ein riskantes Verhaltensmuster des Clients definiert ist und das Verfahren **dadurch gekennzeichnet ist, dass** es folgende Schritte umfasst:
die Client-Vorrichtung (220) eine von dem Client initiierte Gegenmaßnahme (222) gemäß dem im Voraus vereinbarten Client-Server-Protokoll anfordert;
die Server-Vorrichtung mit einer Angabe einer bestimmten Gegenmaßnahme antwortet, die von der Client-Vorrichtung (220) auszuführen ist;
die Client-Vorrichtung (220) die angegebene bestimmte Gegenmaßnahme ausführt und eine Reaktion (232) auf die Gegenmaßnahme an die Server-Vorrichtung sendet; und
die Server-Vorrichtung die Reaktion des Clients (232) auf die Gegenmaßnahme verifiziert und, falls verifiziert, die Online-Sitzung als nicht betroffen markiert.

## Revendications

1. Un procédé de sécurisation d'une session client-serveur en ligne entre un dispositif client (220) et un dispositif serveur par application d'au moins une contre-mesure comprenant une paire session-sécurité défi-réponse prédéterminée, le procédé comprenant les étapes suivantes :
le dispositif serveur recueille un modèle de comportement de client (224) durant la session en ligne ;
le dispositif serveur marque la session en ligne comme session affectée (262) selon un protocole client-serveur pré-accordé, dans lequel affecté est définit en tant que modèle de comportement de client à risque, le procédé étant **caractérisé en ce qu'**il comprend :
le dispositif client (220) sollicite une contre-mesure initiée par le client (222) selon le protocole client-serveur pré-accordé ;
le dispositif serveur répond avec une indication d'une contre-mesure spécifique devant être exécutée par le dispositif client (220) ;
le dispositif client (220) exécute la contre-mesure spécifique indiquée et envoie au dispositif serveur une réaction (232) à la contre-mesure ; et,
le dispositif serveur vérifie la réaction de client (232) à la contre-mesure, et si vérifiée, marque la session en ligne comme non affectée.

2. Le procédé selon la revendication précédente comprenant également les étapes suivantes :
si la réaction de client (232) à une contre-mesure n'est pas vérifiée, le dispositif client (220) sollicite une contre-mesure initiée par le client (222) supplémentaire selon le protocole client-serveur pré-accordé ;
le dispositif serveur répond avec une indication d'une contre-mesure supplémentaire spécifique devant être exécutée par le dispositif client (220) ;
le dispositif client (220) exécute la contre-mesure supplémentaire spécifique indiquée et
envoie au dispositif serveur une réaction (232) à la contre-mesure supplémentaire ; et,
le dispositif serveur vérifie la réaction du client (232) à la contre-mesure supplémentaire, et si vérifiée marque la session en ligne comme non affectée.

3. Le procédé selon l'une quelconque des revendications précédentes dans lequel le protocole client-serveur pré-accordé comprend actionner les étapes consistant à marquer et à solliciter une contre-mesure (222) si :
un modèle de comportement de client (224) spécifique a lieu durant la session en ligne ; et/ou
une période de temps périodique s'écoule durant la session en ligne.

4. Le procédé selon la revendication précédente dans lequel le modèle de comportement de client (224) inclut au moins une sélection du groupe consistant en : un risque de sécurité estimé au-dessus d'un seuil prédéterminé, en particulier un risque estimé de piratage de compte illégal supérieur à un seuil prédéterminé ; une caractéristique ou des caractéristiques de dispositif spécifique ; un parcours d'utilisateur spécifique ; une interaction d'utilisateur spécifique ; un ensemble spécifique d'interactions d'utilisateur ; et un manque d'interaction d'utilisateur spécifique.

5. Le procédé selon l'une quelconque des revendications précédentes dans lequel le dispositif client (220) sollicitant une contre-mesure initiée par le client (222) selon le protocole client-serveur pré-accordé est synchronisé avec des évènements de session en ligne prédéterminés, les évènements de session en ligne prédéterminés comprenant en particulier la connexion de la session en ligne, la perte de focalisation de fenêtre de la session en ligne, ou une combinaison de ceux-ci.

6. Le procédé selon l'une quelconque des revendications précédentes dans lequel la contre-mesure spécifique devant être exécutée par le dispositif client (220) est choisie parmi une liste comprenant :
noircir la capture d'écran en ajustant les permissions de capture d'écran ;
exécuter une réponse de défi, comprenant en particulier un défi texte-exécution, un défi mouvement de souris et/ou un défi classification d'image ;
exécuter un défi d'authentification à deux facteurs ; et
se déconnecter de la session en ligne.

7. Le procédé selon l'une quelconque des revendications précédentes dans lequel le dispositif serveur marque la session en ligne comme session affectée (262) selon un protocole client-serveur pré-accordé, sans envoyer une indication du statut affecté (252) au client.

8. Le procédé selon l'une quelconque des revendications précédentes dans lequel la session en ligne est une session web client-serveur et le dispositif client (220) lance un navigateur web destiné à exécuter le côté dispositif client du procédé et/ou la session en ligne est une session d'application client-serveur et le dispositif client (220) lance une application comprenant une bibliothèque d'application destinée à exécuter le côté dispositif client du procédé.

9. Le procédé selon la revendication précédente dans lequel le dispositif serveur est destiné à servir une page web comprenant des instructions de logiciel qui lorsqu'elle est lancée sur le dispositif client (220) fait en sorte qu'il exécute le côté dispositif client du procédé.

10. Le procédé selon l'une quelconque des revendications précédentes dans lequel une indication de sessions marquées comme affectées est stockée dans un cache dynamique avec une période de lecture limitée dans le temps, ou dans une file d'attente, ou dans une base de données.

11. Le procédé selon la revendication précédente comprenant également fournir un service de contre-mesure pour que le dispositif serveur réponde avec une indication d'une contre-mesure ou de contre-mesures spécifiques devant être exécutées par le dispositif client (220), dans lequel ledit service de contre-mesure est un service de sondage initié par le client.

12. Le procédé selon l'une quelconque des revendications précédentes dans lequel une session marquée comme affectée a une contre-mesure ou des contre-mesures correspondantes stockées dans une base de données de contre-mesures ; préférablement dans lequel la contre-mesure ou les contre-mesures disponibles pour une session marquée comme affectée sont déterminées par un ou plusieurs actionneurs sur le dispositif serveur lorsque la session en ligne est marquée comme session affectée (262) selon le protocole client-serveur pré-accordé.

13. Le procédé selon la revendication précédente dans lequel un ou plusieurs actionneurs sont contenus dans une base de données à règles où, pour chaque règle, une contre-mesure correspondante est activée ou désactivée en fonction d'une condition ou de conditions prédéterminées.

14. Le procédé selon l'une quelconque des revendications précédentes dans lequel les communications entre le dispositif serveur et le dispositif client (220) sont cryptées et/ou la session client-serveur en ligne est pré-authentifiée.

15. Un moyen lisible par ordinateur non transitoire comprenant des instructions de logiciel informatique pour la sécurisation d'une session client-serveur en ligne entre un dispositif client (220) et un dispositif serveur qui, lorsqu'il est exécuté par un processeur, fait en sorte que le processeur exécute le procédé de l'une quelconque des revendications 1-14.

16. Un système informatique comprenant le moyen lisible par ordinateur de la revendication précédente.

17. Un système comprenant un dispositif client (220) et un dispositif serveur, pour la sécurisation d'une session client-serveur en ligne entre le dispositif client (220) et le dispositif serveur par application d'au moins une contre-mesure comprenant une paire session-sécurité défi-réponse prédéterminée, le système étant destiné à exécuter les étapes suivantes :
le dispositif serveur recueille un modèle de comportement de client (224) durant la session en ligne ;
le dispositif serveur marque la session en ligne comme session affectée selon un protocole client-serveur pré-accordé, dans lequel affecté est définit tel qu'un modèle de comportement de client à risque, le système étant **caractérisé en ce qu'**il est destiné à exécuter les étapes suivantes :
le dispositif client (220) sollicite une contre-mesure initiée par le client (222) selon le protocole client-serveur pré-accordé ;
le dispositif serveur répond avec une indication d'une contre-mesure spécifique devant être exécutée par le dispositif client (220) ;
le dispositif client (220) exécute la contre-mesure spécifique indiquée et envoie au dispositif serveur une réaction (232) à la contre-mesure ; et,
le dispositif serveur vérifie la réaction de client (232) à la contre-mesure, et si vérifiée, marque la session en ligne comme non affectée.
